# EUROPEAN PATENT APPLICATION

(11) **EP 1 782 900 A1**
(43) Date of publication of application: **09.05.2007**
(21) Application number: 06020101.9
(22) Date of filing: 26.09.2006
(51) Int. Cl.: B23B 39/22, B28D 1/04

(54) **Machine for working on sheets, particularly machine for drilling holes in glass sheets**

(30) Priority: 30.09.2005 IT MI20051849
(71) Applicant: Z. BAVELLONI S.p.A., I-22070 Bregnano (Como) (IT)
(72) Inventor: Bavelloni, Franco, 22020 San Fermo della Battaglia (Como) (IT)
(74) Representative: Alagem Modiano, Lara S.

(57) **Abstract**

A machine for working on sheets, particularly a machine for drilling holes in glass sheets, comprising, on a frame (1) for supporting a sheet (2) to be worked, an upper working head (5) and a lower working head (6). A sheet locking assembly constituted by an upper pressing surface (7) and a lower pressing surface (10,11) is provided, the lower pressing surface (10,11) being disengaged from the lower working head (6).

## Description

The present invention relates to a machine for working on sheets, particularly to a machine for drilling holes in glass sheets.

As is known, in performing operations such as drilling holes in glass sheets it is necessary to lock the sheet in order to prevent it from breaking or chipping; for this purpose, it is essential that the distance between the pressing surfaces and the drilling tool be as small as possible.

Glass sheets are drilled by using two mutually opposite spindles which act simultaneously; during drilling, the lower tool disengages first from the sheet, so that the "tablet" of material removed to produce the hole can fall by gravity.

The background art typically uses rubber-coated pressing surfaces, which are connected directly to the lower and upper working heads, so as to be able to apply the pressure in very close proximity to the drilling tool.

In the specific case, the lower pressing surface is connected to the lower spindle, and therefore, during the expulsion of the tablet, the spindle must remain in position, accordingly requiring a protection system in order to prevent the falling tablet from coming into contact with the tool.

The aim of the present invention is to solve the problem described above, by providing a machine for working on sheets, particularly a machine for drilling holes in glass sheets, which allows to apply a correct pressure in the direct vicinity of the tool work area, but with the possibility also to disengage the tools so that they do not constitute a hindrance during the step for the expulsion of the tablet.

Within this aim, an object of the invention is to provide a machine for working on sheets which allows to also provide work other than drilling and can also feed the sheets to be worked in a mechanized manner.

Another object of the present invention is to provide a machine for working on sheets which, thanks to its particular constructive characteristics, is capable of giving the greatest assurances of reliability and safety in use.

Still another object of the present invention is to provide a machine for working on sheets which can be obtained easily starting from commonly commercially available elements and materials and is also competitive from a merely economical standpoint.

This aim and these and other objects, which will become better apparent hereinafter, are achieved by a machine for drilling holes in sheets, particularly a machine for drilling holes in glass sheets, according to the invention, comprising, on a frame for supporting the sheet to be worked, an upper working head and a lower working head, a sheet locking assembly being further provided, characterized in that said locking assembly comprises an upper pressing surface and a lower pressing surface, said lower pressing surface being disengaged from said lower working head.

Further characteristics and advantages will become better apparent from the description of a preferred but not exclusive embodiment of a machine for working on sheets, particularly a machine for drilling holes in glass sheets, illustrated by way of non-limiting example in the accompanying drawings, wherein:
Figure 1 is a view of the machine when inactive, during the positioning of the sheet;
Figure 2 is a view of the initial step of drilling work;
Figure 3 is a view of the final step of drilling, with removal of the lower working head and expulsion of the tablet;
Figure 4 is a view of the machine with the lower and upper pressing surfaces moved mutually apart;
Figure 5 is a view of the machine during the execution of work other than drilling;
Figure 6 is a schematic perspective view of a part of the lower pressing surface and of the means for moving the sheet being worked.

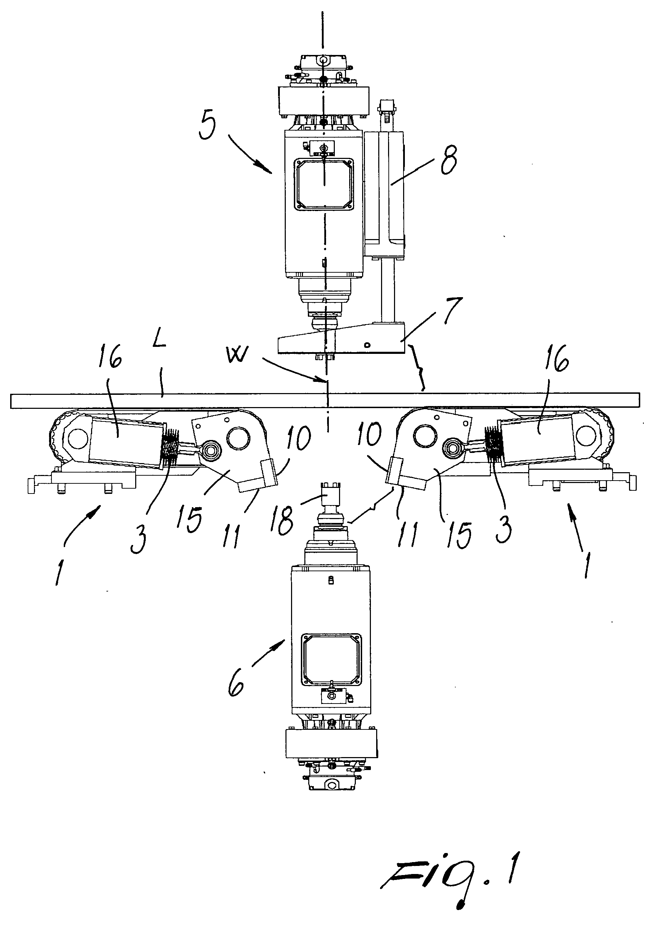

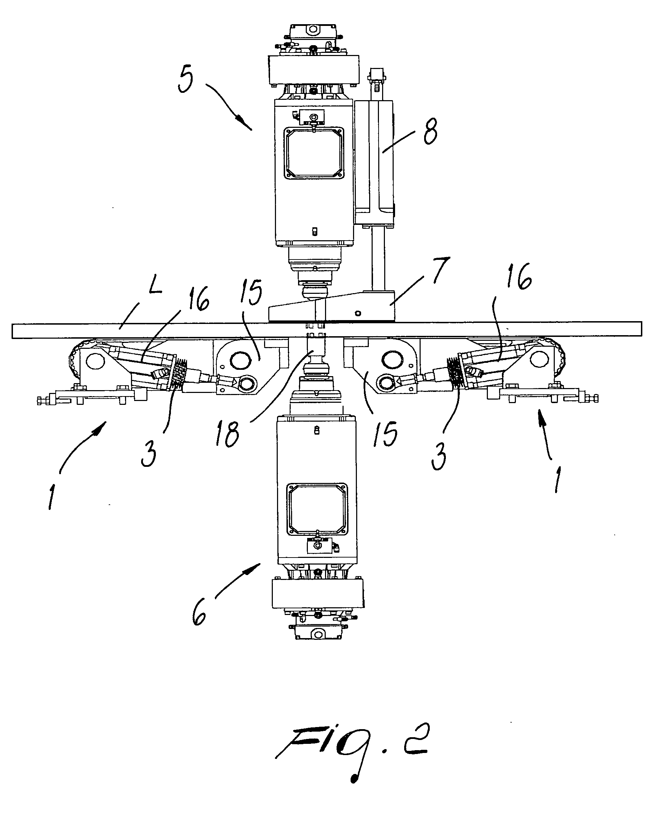

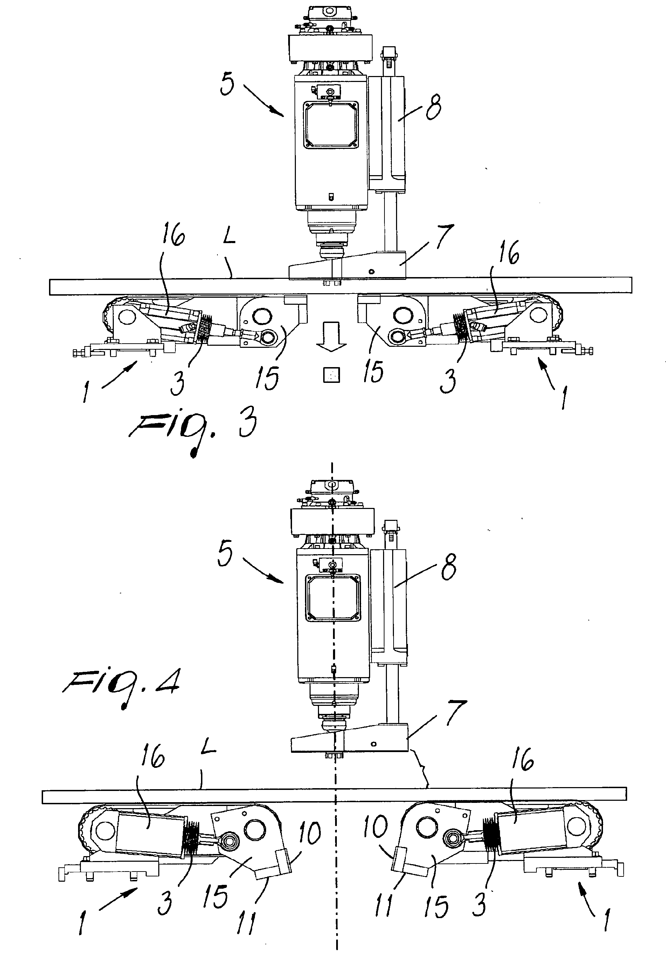

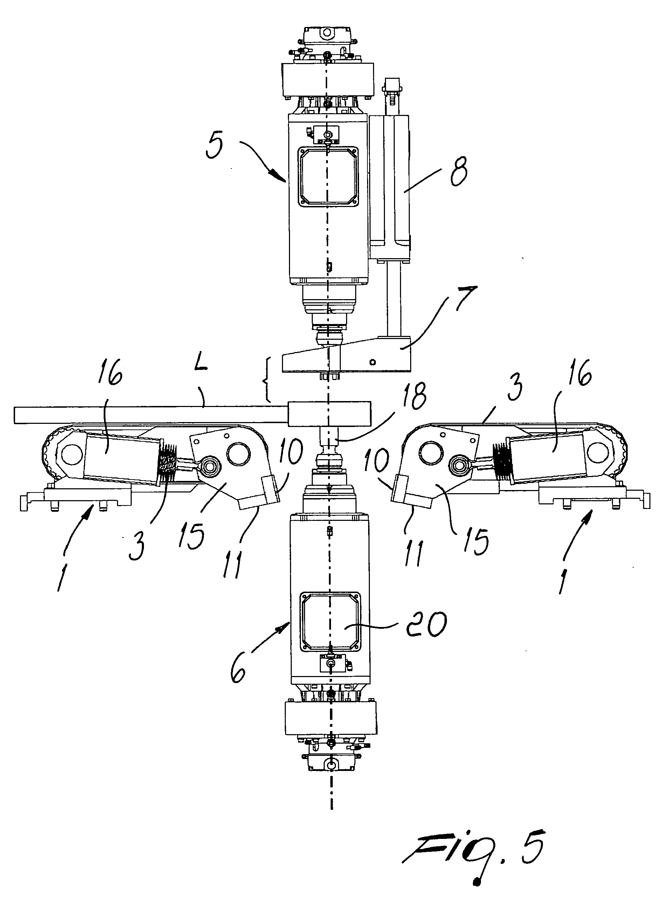

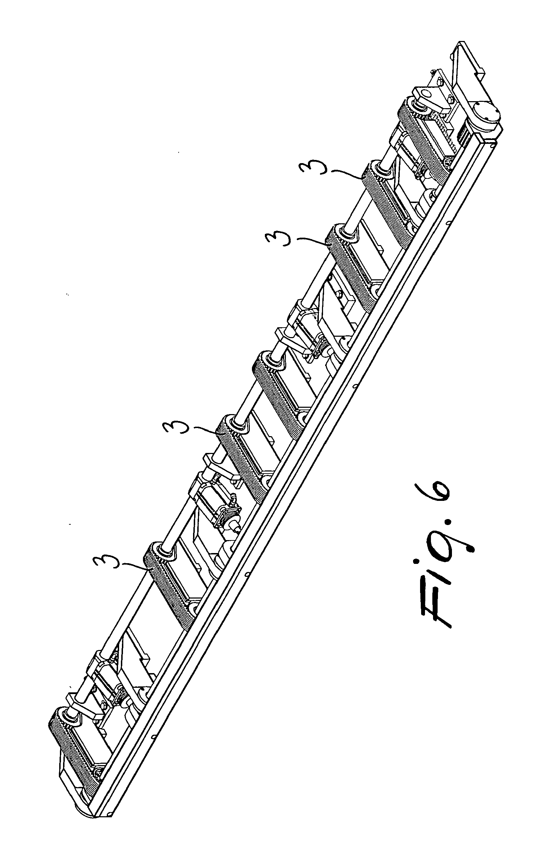

With reference to the figures, the machine for working on sheets, particularly a machine for drilling holes in glass sheets and the like, according to the invention, comprises a supporting frame, generally designated by the reference numeral 1, which forms a supporting surface for a sheet L to be worked, at which driving belts act which are constituted by a plurality of driving belts 3 which are arranged side by side and run continuously in a sheet advancement direction which is termed longitudinal for the sake of convenience.

The driving belts 3 are divided into two groups, which are arranged symmetrically with respect to an imaginary working line, where there is an upper working head 5 and a lower working head 6.

The machine further comprises an assembly for locking the sheet L, which has an upper pressing surface 7 connected to an upper actuation cylinder 8, which is associated directly with the upper working head and allows the movement of the upper pressing surface along a direction which is substantially perpendicular to the plane of arrangement of the sheet L.

The sheet locking assembly has a lower pressing surface, which is disengaged from the lower working head and is constituted by a first bar 10 and a second bar 11, which are arranged symmetrically with respect to the working line W of the working heads and are supported advantageously at the driving belts 3.

In this manner, two distinct pressing bars 10 and 11 are provided which are disengaged from the working head 6, affect or extend over substantially the entire width of the sheet being worked and are supported by bar positioning means provided by way of oscillating plates, designated by the reference numeral 15, which are connected to actuation cylinders 16 which allow to move the pressing bars 10 and 11 away from the sheet and mutually spaced, so as to allow the use of tools other than drilling tools and having any size deemed appropriate.

For this purpose, a grinding wheel 20 is shown which has been positioned as a replacement of the lower drilling tool 18 and allows for example to work the edge.

In practical operation, the sheet L is positioned at the work area, and once the sheet has been positioned, the lower pressing bars 10 and 11 are made to rise by means of the cylinders 16 up to a mechanically preset level which corresponds to the lower face of the sheet being worked; likewise, the upper pressing surface 7 is made to descend until it presses against the surface of the sheet with a preset pressure.

The upper working head 5 and the lower working head 6 accordingly put to work the respective drilling tools 17 and 18, performing the initial step of drilling in a region which is closely flanked by the elements that apply the retention pressure.

When the tool of the lower working head has reached a preset height, the lower working head 6 retracts the lower tool 18 and is moved with a translational motion by action of movement means 20 of a known type, along a direction which is substantially perpendicular to the plane of arrangement of the sheet and then moves along a transverse direction, which is substantially parallel to the extension of the pressing bars, so as to not be located at the drilling region.

The upper drilling tool 17, by means of the upper working head 5, completes the drilling of the sheet and the tablet of sheet that is removed falls into a lower collection region, which is not hindered in any way by the working head, as instead occurs in the background art.

During this step, the lower working head, which has moved outside the work area, is free to perform other operations, such as for example a change of tool, consequently achieving an improvement in the total cycle time.

From what has been described above it is therefore evident that the invention achieves the intended aim and objects, and in particular the fact is stressed that the provision of a lower pressing surface which is disengaged from the lower working head allows first of all to work better during the drilling steps and further allows to have a large region available for the application of tools other than drilling tools, thus allowing to better optimize the work.

Another important aspect further consists in that the lower pressing surface affects the tool in its close work vicinity and further retains the sheet along its entire width, thus contributing to a better working condition.

Moreover, it is particularly important that the lower pressing surface is in practice obtained in two parts, which are arranged symmetrically and are separated with respect to the line where it is possible to provide the drilling holes thanks to the possibility of the working heads to perform a translational motion along a direction which is substantially parallel to the longitudinal direction of the pressing bars.

Moreover, the structure that is used allows to move away the lower pressing region during operations other than drilling, thus allowing to have a large free region available.

Terms used herein, such as "upper" or "lower" refer to the machine as represented in the figures enclosed and are intenteded only to facilitate understanding of the description. Therefore such terms are not to be interpreted as a limitation of the configuration described to only the positions illustrated.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2005A001849 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine for working on sheets, particularly a machine for drilling holes in glass sheets, comprising, on a frame (1) for supporting a sheet (2) to be worked, an upper working head (5) and a lower working head (6), a sheet locking assembly being further provided, **characterized in that** said locking assembly comprises an upper pressing surface (7) and a lower pressing surface (10,11), said lower pressing surface (10,11) being disengaged from said lower working head (6).

2. The machine according to claim 1, comprising a frame for supporting a sheet to be worked, **characterized in that** it comprises, on said supporting frame (1), driving belts (3) which are arranged side by side and run continuously in a direction which substantially coincides with the longitudinal direction of advancement of a sheet (2) being worked.

3. The machine according to the preceding claims, **characterized in that** said belts (3) are arranged respectively downstream and upstream of a working line (W) where said working heads (5,6) are positioned.

4. The machine according to one or more of the preceding claims, **characterized in that** said lower pressing surface comprises a first bar (10) and a second bar (11), which are arranged symmetrically with respect to said working line (W) of said working heads (5,6) and are supported independently by said lower working head (6).

5. The machine according to one or more of the preceding claims, **characterized in that** it comprises means for positioning said bars (10,11) which are provided by oscillating plates (15) which are connected to actuation cylinders (16).

6. The machine according to one or more of the preceding claims, **characterized in that** said pressing bars (10,11), in the inactive position, are mutually spaced in order to use on said lower working head (6) tools (20) other than drilling tools.

7. The machine according to one or more of the preceding claims, **characterized in that** at least said lower working head (6) is connected to means (20) for movement along a transverse direction which is substantially parallel to the direction of extension of said pressing bars (10,11).

8. The machine according to one or more of the preceding claims, **characterized in that** said pressing bars (10,11) affect substantially the entire width of the sheet (2) being worked.
